# EUROPÄISCHE PATENTSCHRIFT

(11) **EP 1 628 814 B1**
(45) Veröffentlichungstag und Bekanntmachung des Hinweises auf die Patenterteilung: **10.07.2013**
(21) Anmeldenummer: 04735011.1
(22) Anmeldetag: 27.05.2004
(51) Int. Cl.: B29B 17/00, B29B 9/16, B29C 47/00, C08J 11/06

(54) **VERFAHREN ZUM LEBENSMITTELECHTEN RECYCELN VON POLYETHYLEN-TEREPHTHALAT (PET)**
METHOD FOR RECYCLING POLYETHYLENE-TEREPHTHALATE (PET) FOR FOOD CONTACT APPLICATIONS
PROCEDE DE RECLYCLAGE DU POLYTEREPHTHALATE D'ETHYLENE (PET) A USAGE ALIMENTAIRE

(30) Priorität: 27.05.2003 DE 10324098
(43) Veröffentlichungstag der Anmeldung: 01.03.2006
(73) Patentinhaber: Gebrüder Schoeller, 82049 Pullach (DE)
(72) Erfinder: FREDL, Rüdiger, 65549 Limburg/Lahn (DE); SCHNELL, Hans, 65614 Beselich (DE); SCHOELLER, Martin, 82343 Niederpöcking (DE)
(74) Vertreter: Bockhorni & Kollegen
(86) Internationale Anmeldenummer: PCT/EP2004/005757
(87) Internationale Veröffentlichungsnummer: WO 2004/106025

(56) Entgegenhaltungen:
- EP-B- 0 966 344
- WO-A-01/21372

## Beschreibung

Die vorliegende Erfindung betrifft ein Verfahren zum Recyceln von Polyethylen-Terephthalat (PET) nach dem Oberbegriff des Anspruchs 1.

Polyethylen-Terephthalat (PET) erfreut sich zunehmender Beliebtheit für die Verwendung bei Getränkeflaschen, medizinischen Geräten, als Fasern oder Folien usw. Aufgrund des stark gestiegenen Einsatzes von PET besteht auch ein starkes Bedürfnis, PET-Produkte, z.B. PET-Getränkeflaschen, nach dem Ende ihrer Lebenszeit zu recyceln und so einen geschlossenen Wertstoffkreislauf für das PET-Material zu installieren.

Die Druckschrift WO 01/21372 beschreibt ein Verfahren zum Recylieren von PET-Gut und/oder Gegenständen aus PET. Das Verfahren besteht aus einer zweistufigen Behandlung, nämlich einer Vorbehandlung und einer Hauptbehandlung. Nach dem Zerkleinern und dem Waschen des PET-Guts wird dieses in eine Vorbehandlungseinrichtung eingeführt, wobei das PET-Gut auch in dieser Einrichtung zerkleinert werden kann. Anschließend wird das PET-Gut kristallisiert und bei gleichzeitiger Trocknung vorverdichtet, wobei die Vorverdichtung durch mechanische Beaufschlagung bzw. Energieeinbringung in das PET-Gut bewirkt wird. Nach einer entsprechenden Verweilzeit wird das PET-Gut über ein Förderband einer Hauptbehandlungseinrichtung zugeführt. In der Hauptbehandlung, welche unter Vakuum erfolgt, wird das PET-Gut weiter getrocknet, kristallisiert und unter hohem Vakuum für eine entsprechende Verweilzeit gehalten. Nach dem Hauptbehandlungsschritt erfolgt eine Plastifizierung des PET-Guts mittels Extruder. Das PET-Gut wird in dem Extruder plastifiziert bzw. geschmolzen, wobei der Extruder auch eine Entgasungszone besitzen kann.

Aus der EP 966 344 ist ein Verfahren zum Recyceln von PET bekannt, bei dem das zu recycelnde PET-Material, beispielsweise ausgediente Getränkeflaschen, zunächst zu sogenannten PET-Flakes zerkleinert, von metallischen oder anderen Fremdstoffen, wie z.B. Verschlusskappen, getrennt und durch eine Vorwäsche von grobem Schmutz gereinigt werden. Die so erhaltenen PET-Flakes werden nach einem weiteren Waschprozess einem speziellen Extruder, nämlich einem Doppelschneckenextruder oder einem ähnlich gearteten Extruder zugeführt, wobei in dem Extruder Entgasungszonen vorgesehen sind, die zu einem Entfernen von flüchtigen Kontaminationen dienen. Beispielsweise werden hier Acetaldehyde und Oligomere entfernt bzw. reduziert, die beim weiteren Recycling oder bei der Verarbeitung zu neuen PET-Produkten störend sind. Während des Extrudierens wird das Material zusätzlich üblicherweise einem weiteren "Strippen" unterzogen, was soviel bedeutet, dass Inertgas, wie Stickstoff unter homogener Verteilung eingedüst wird, so dass sich die flüchtigen Kontaminationen besser verteilen können und dadurch besser eliminiert werden können.

Neben dem Extrudieren und damit verbundenem bzw. nachfolgendem Granulieren wird das zu recycelnde PET-Material in einem weiteren Verfahrensschritt, einer sogenannten Feststoff-Nachkondensation unterzogen, bei der das Material in einem Taumeltrockner Temperaturen von 220 bis 250°C bei nahezu Vakuumkonditionen, also im Druckbereich von 0,1 bis 0,01 mbar, ausgesetzt wird. Hier werden die restlichen Kontaminationen nahezu vollständig dem Material entzogen und die intrinsische Viskosität erhöht.

Obwohl diese Verfahren zu zufriedenstellenden Ergebnissen führen, besteht weiterhin ein Bedarf, diese Verfahren hinsichtlich der wirtschaftlichen Durchführbarkeit und der Recyclingergebnisse, d.h. der Qualität der Recyclingprodukte, zu verbessern und zu optimieren.

Insbesondere ist es erforderlich bei einem entsprechenden gattungsgemäßen Recyclingverfahren, bei welchem neues Ausgangsmaterial für unterschiedlichste Produkte zur Verfügung gestellt werden soll, eine homogene Qualität des recycelten Materials zu gewährleisten. Anders als bei Recyclingverfahren, die direkt mit der Herstellung eines bestimmten Produktes enden, ist es nämlich beim Recyclieren von PET zu einem neuen Rohmaterial, welches wiederum zur Herstellung verschiedenster Produkte eingesetzt werden kann, besonders wichtig, dass das durch das Verfahren erzeugte Granulat bzw. die Flakes eine gleichbleibende und gleichmäßige Qualität aufweisen.

Es ist deshalb Aufgabe der vorliegenden Erfindung, das Verfahren der anfangs genannten Art dahingehend zu verbessern, dass es wirtschaftlicher und effizienter durchgeführt werden kann und dass das recycelte Material gleichzeitig eine zumindest gleichbleibende Qualität, vorzugsweise eine höhere Qualität aufweist, insbesondere homogen ist.

Diese Aufgabe wird gelöst durch ein Verfahren mit den Merkmalen des Anspruchs 1. Vorteilhafte Ausgestaltungen sind Gegenstand der abhängigen Ansprüche.

Gemäß der vorliegenden Erfindung wird das bekannte Verfahren zum Recyceln von PET dahingehend verbessert, dass ein Kristallisationsschritt zwischen Extrudieren/Granulieren und Feststoff-Nachkondensation und bevorzugt ein Trocknungsschritt vor dem Extrudieren/Granulieren eingefügt wird. Diese beiden Maßnahmen, die alternativ oder in Kombination miteinander in das Verfahren eingeführt werden, bewirken sowohl für sich alleine als auch in Kombination miteinander eine effizientere und damit kostengünstigere Durchführung des Verfahrens und eine höhere Produktqualität.

Der Trocknungsschritt führt zu einem geringeren Wasser- bzw. Wasserdampfgehalt im Extruder, was dazu führt, dass die Viskosität des PET-Materials beim Extrudieren nicht so stark absinkt bzw. das recycelte Material eine höhere Viskosität aufweist, was wiederum die Weiterverarbeitung beispielsweise zu Getränkeflaschen begünstigt. Die Trocknung kann durch alle geeigneten Verfahren bewirkt werden, wie z. B. durch eine Heißluftbehandlung des insbesondere zerkleinerten, gewaschenen und von Fremdstoffen getrennten PETs in einem Schacht oder einem Rinnentrockner im Gegenstrom, durch Infrarot- oder Mikrowellenbehandlung oder allgemein durch Einwirken von elektromagnetischen Wellen.

Außerdem bewirkt der Trocknungsschritt, dass eine konstante Eingangsfeuchte für die nachfolgenden Verfahrensschritte gewährleistet ist, so dass diese nachfolgenden Verfahrensschritte auf diese Eingangsfeuchte eingestellt bzw. optimiert werden können, was einerseits wiederum zu einer höheren Qualität an sich und darüber hinaus auch zu einer gleichbleibenden homogenen Qualität des recycelten Materials führt.

Vorzugsweise wird durch den Trocknungsschritt, der bei Trocknungstemperaturen um 150°C durchgeführt werden kann, die Feuchte des PET-Materials auf einen Wert von idealerweise ungefähr 0,05 Vol.-% abgesenkt. Allerdings sind selbstverständlich auch höhere Feuchtegehalte bis 0,2 Vol.-% oder maximal 0,7 Vol.-% möglich. Die Eingangsfeuchte des zu recycelnden Materials vor dem Trocknungsschritt, die üblicherweise 1 bis 1,5 oder ausnahmsweise bis zu 2 Vol.-% betragen kann, sollte jedoch deutlich reduziert werden.

Außerdem fördert der verringerte Wasserdampfgehalt im Extrusionsprozess die Entgasung des Acetaldehyds, so dass ein verbesserter Abbau des Acetaldehyds bewirkt wird.

Der Trocknungsschritt wird vorzugsweise in einem kontinuierlichen Verfahren, vorzugsweise über 1 bis 6 Stunden, insbesondere 3 bis 5 Stunden durchgeführt. Dadurch ergibt sich ein wirtschaftlicher Vorteil, indem die Verweildauer des Materials bei der Nachkondensation deutlich verringert werden kann.

Der zusätzliche Kristallisationsschritt führt dazu, dass bei dem extrudierten/granuliertem PET die Teilkristallinität von Werten von 15 bis 25 % auf 30 bis 50 % erhöht, also um ca. 50 % gesteigert wird, was dazu führt, dass der Feststoff-Nachkondensationsprozess besser, insbesondere mit konstanten Parametern, und/oder schneller durchgeführt werden kann. Insbesonder führt die *Teilkristallinität* des PET dazu, dass es bei den folgenden Verarbeitungsschritten, insbesondere der Feststoff-Nachkondensation, nicht zu einer Verklebung des PET-Granulats kommt. Auch dadurch kann die notwendige Zeit für den Feststoff-Nachkondensationsprozess verringert werden.

Vorzugsweise wird der Kristallisationsschritt in einem Heißluftstrom durchgeführt.

Bei einer bevorzugten Ausführungsform können an dem Extruder ferner Sprühdüsen vorgesehen sein, mit denen die PET-Flakes am Eingang des Extruders mit vorzugsweise Ethylenglykol beaufschlagt werden. Mittels der Zugabe von Ethylenglykol können die Viskositätsunterschiede der Flakes ausgeglichen und auf ein gezieltes Niveau gebracht werden. Vorteilhaft ist es hierbei am Extruder-Ausgang eine Differenzdruck-Messeinheit vorzusehen, um mittels dieser Einheit Viskositätsänderungen feststellen zu können. Auf diese Weise ist es möglich, auf Viskositätsänderungen durch die Zugabe von Ethylenglykol in einem Regelkreis zu reagieren. Durch diese vorteilhafte Maßnahme wird weiterhin die Viskositätsgleichmäßigkeit des Endprodukts positiv beeinflusst.

Vorzugsweise können vor oder bei der Extrusion, also beispielsweise am Eingang des Extruders Zugabestellen für zusätzliche Additive, wie Stabilisatoren, Katalysatoren usw. vorhanden sein, mit denen ebenfalls die Homogenität und Qualität des PET beispielsweise hinsichtlich einer verbesserten intrinsischen Viskosität beeinflusst werden kann.

Vorzugsweise können vor oder bei der Extrusion auch Farbadditive zugegeben werden, die das recycelte Material auf eine bestimmt Farbe einstellen. Damit kann auch erreicht werden, dass das recycelte Material einen gleichmäßigen Farbton aufweist, was wiederum für die spätere Weiterverarbeitung wichtig ist.

Besonders vorteilhaft hat es sich erwiesen für PET-Material, das nachfolgend zu Mineralwassergetränkeflaschen verarbeitet werden soll, einen grauen Farbton einzustellen, da dieser zusammen mit dem später eingefüllten Wasser der PET-Recyclingflasche überraschenderweise durch die Kontrastbildung ein frisches und klares Aussehen vermittelt. Vorzugsweise kann das recycelte Material am Ende des Recyclingprozesses noch mit PET-Neumaterial gemischt werden, um auf diese Weise eine besonders homogene Granulatmischung zu erzeugen, die eine gleichbleibende Ausgangsqualität auch hinsichtlich des Farbtons für den späteren Verarbeitungsprozess bildet.

Zu diesem Zweck ist es auch möglich amorphes PET vor oder im Extrusionsschritt dem Verfahren beizumengen, wobei hier gleichzeitig eine günstige und sinnvolle Verwendung für das amorphe Material gegeben ist

Ferner ist es vorteilhaft, die Schmelze bei der Extrusion für mit Kunststoff geeigneten Filtern, wie Siebkombinationen in Kerzen- oder Scheibenform zu filtern. Damit lassen sich Schmutzpartikel aus der Umwelt und auch solche, die während der Polyesterherstellung entstehen, aus der Schmelze entfernen. Entsprechende Schmutzpartikel können beispielsweise von den eingesetzten Katalysatoren oder von thermischen Zersetzungsprodukten stammen.

Als Filter haben sich hierbei Wechselfilter bewährt, die einen unterbrechungsfreien Betrieb gewährleisten. Die Porengröße der Filter sollte kleiner als 100 µm sein.

Bei einer weiteren vorteilhaften Ausführungsform wird das Recyclingmaterial beim Granulieren auf eine Granulatkorngröße von 0,8 bis 3 mm eingestellt, wobei insbesondere Korngrößen im Bereich von 0,8 bis 1,5 mm bevorzugt sind. Durch die kleineren Granulatkörner ergeben sich in den nachfolgenden Verfahrensschritten der Kristallisation und Nachkondensation kürzere Reaktionszeiten und damit entweder eine Steigerung der Produktionsgeschwindigkeit oder eine Steigerung der Homogenität des recycelten PET-Materials bzw. eine Kombination aus beiden Vorteilen.

Gemäß eines bevorzugten Ausführungsbeispiels wurden lose bzw. in Ballen gepresst angelieferte PET-Flaschen vorgewaschen, damit die Getränkereste und sonstige anhaftende Verschmutzungen vom PET entfernt werden können. Hierzu wird vorzugsweise ein mit etwas Natronlauge versetztes Spülwasser (1-10 %ige, vorzugsweise 3%ige Natronlauge) verwendet. Dies führt auch dazu, dass Klebstoffe, die beispielsweise von aufgeklebten Etiketten herrühren, weitgehend bzw. vollständig entfernt werden können. Auch werden die PET-Flaschen zerkleinert und sogenannte PET-Flakes hergestellt, wobei in diesem Verfahrensschritt auch eine Trennung durchgeführt wird, beispielsweise der schwimmenden von den sinkenden Materialien, Verschlusskappen aus Polyolefinen oder sonstigen Fremdstoffen wie anderen Kunststoffen, Metallteilen und dergleichen. Danach wird das PET, d.h. die PET-Flakes noch einmal sauber gewaschen. Diese Feinwäsche erfolgt mit Wasser, dem ein Tensid aus der Reihe der kation- oder anionaktiven sowie nichtionogenen Netzmitteln oder Gemischen derselben zugesetzt werden kann. Die Feinwäsche kann darüber hinaus auch mit Dampf durchgeführt werden, wobei die Flakes am Ende der Wäsche neutral (pH 7) sein sollten.

Anschließend werden sie einem Heißlufttrockner (Rinnentrockner, Schacht) zugeführt, bei dem Sie bei Temperaturen um 120° bis 160°C, vorzugsweise ca. 150°C etwa 3 Stunden getrocknet werden. Danach werden sie einem 1-Wellen-, 2-Wellen oder Mehrwellenextruder (Ringextruder) mit einer Schneckendrehzahl von ca. 350 U/min und einem Durchmesser von ca. 50 mm zugesetzt, der mehrere, insbesondere 3 Entgasungszonen mit Vakuumpumpenständen aufweist und bei dem das Material unter nahezu Vakuum (< 100 mbar) bei einer Temperatur von ca. 280°C extrudiert wird. Nach der Extrusion und der Granulation des PET wird das Material einem Heißluftstrom im Rüttelbett (Kristallisator) ausgesetzt, wobei das Material bei 130°C bis 160°C, vorzugsweise 140°C 10-20 min., vorzugsweise 15 min. im Rüttelbett verbleibt, bis sich eine gewisse Teilkristallinität von 30% bis 50%, vorzugsweise 40% einstellt, die insbesondere ein Verkleben des PET bei der weiteren Verarbeitung verhindert.

Nach dem Kristallisationsschritt wird das Recyclingmaterial der Feststoff-Nachkondensation durchgeführt, die in einem Taumeltrockner bei Temperaturen von 200 bis 250 °C und einem Druck kleiner 1 mbar zwischen 4 und 18 Stunden durchgeführt wird, wobei der Taumeltrockner bis zu 2 Umdrehungen pro Minute durchführt.

Bei dem so erzeugten PET-Recyclat hat sich ergeben, dass nur noch Spuren von Kontamination im ppm-Bereich nachgewiesen werden konnten. Die Grenzwerte für den Lebensmittelbereich werden dabei unterschritten.

## Patentansprüche

1. Verfahren zum Recyclen von Polyethylen-Terephthalat (PET) mit den Verfahrensschritten
- Extrudieren und/oder Granulieren unter im Wesentlichen Vakuum (Entgasung) mit oder ohne Strippen zur Entfernung flüchtiger Kontaminationen, insbesondere von Acetaldehyd und Oligomeren;
- Durchführen einer Feststoff-Nachkondensation unter im Wesentlichen Vakuum mit oder ohne Strippen zur Entfernung restlicher Kontaminationen;
**gekennzeichnet durch**
einen Kristallisationsschritt zwischen Extrusion/Granulation und Feststoff-Nachkondensation und bevorzugt einen Trocknungsschritt vor dem Extrudieren/Granulieren..

2. Verfahren nach Anspruch 1,
**dadurch gekennzeichnet, dass**
das PET zur Entfernung erster Kontaminationen gewaschen, insbesondere mit laugenhaltigem Wasser, insbesondere Natronlauge-haltigem Wasser im Konzentrationsbereich von 1-10 %, vorzugsweise 3 % vorgewaschen und mit einem mit vorzugsweise Tensiden versetzten Wasser oder Dampf feingereinigt wird.

3. Verfahren nach Anspruch 1 oder 2,
**dadurch gekennzeichnet, dass**
insbesondere vor dem Waschen des PET das PET durch Zerkleinern, Vorwaschen und/oder Separieren vorbereitet, gereinigt und/oder von grobem Schmutz und Fremdstoffen getrennt wird und insbesondere PET-Flakes erzeugt werden.

4. Verfahren nach einem der vorhergehenden Ansprüche,
**dadurch gekennzeichnet, dass**
der Trocknungsschritt mittels Heißluft oder Behandlung mit elektromagnetischen Wellen, insbesondere Infrarot oder Mikrowellen, erfolgt.

5. Verfahren nach einem der vorhergehenden Ansprüche,
**dadurch gekennzeichnet, dass**
der Trocknungsschritt bei Temperaturen von 120°C bis 160°C, vorzugsweise 150°C, insbesondere für 1 bis 6 Stunden andauert.

6. Verfahren nach einem der vorhergehenden Ansprüche,
**dadurch gekennzeichnet, dass**
der Kristallisationsschritt so lange durchgeführt wird, bis das PET eine Teilkristallinität erreicht, die insbesondere eine Verklebung bei der weiteren Verarbeitung verhindert, insbesondere Werte von 30 bis 50 %, vorzugsweise 40 % Teilkristallinität erreicht.

7. Verfahren nach einem der vorhergehenden Ansprüche,
**dadurch gekennzeichnet, dass**
der Kristallisationsschritt bei Temperaturen von 130°C bis 160 °C, vorzugsweise 140°C für 10 bis 20 min., vorzugsweise 15 min. durchgeführt wird.

8. Verfahren nach einem der vorhergehenden Ansprüche,
**dadurch gekennzeichnet, dass**
der Kristallisationsschritt in einem Heißluftstrom, vorzugsweise in einer Rüttelrinne durchgeführt wird.

9. Verfahren nach einem der vorhergehenden Ansprüche,
**dadurch gekennzeichnet, dass**
das Strippen nur mit Inertgas durchgeführt wird.

10. Verfahren nach einem der vorhergehenden Ansprüche,
**dadurch gekennzeichnet, dass**
das aufgeschmolzene PET-Material gefiltert wird, wobei insbesondere Wechselfilter und/oder Siebkombinationen in Kerzen- oder Scheibenform mit einer Porengröße von vorzugsweise kleiner 100 µm zum Einsatz kommen.

11. Verfahren nach einem der vorhergehenden Ansprüche,
**dadurch gekennzeichnet, dass**
die PET-Flakes vor oder während dem Extrudieren mit Ethylenglykol besprüht werden und/oder mit zusätzlichen Additiven, wie Stabilisatoren, Katalysatoren und dgl. versetzt werden.

12. Verfahren nach Anspruch 11,
**dadurch gekennzeichnet, dass**
die Sprüh-Beaufschlagung der PET-Flakes mit Ethylenglykol vor oder während dem Extrudieren in Abhängigkeit der gemessenen Viskosität am Extruder-Ausgang erfolgt, wobei zur Viskositätsbestimmung, insbesondere eine Differenzdruck-Messeinheit am Extruder-Ausgang vorgesehen ist.

13. Verfahren nach einem der vorhergehenden Ansprüche,
**dadurch gekennzeichnet, dass**
dem Recyclingmaterial vor oder während des Extrudierens Farbadditive zugesetzt werden, die insbesondere dem recycelten Material eine graue Farbe verleihen.

14. Verfahren nach einem der vorhergehenden Ansprüche,
**dadurch gekennzeichnet, dass**
dem Recyclingmaterial vor oder während des Extrusionsschrittes amorphes PET-Neumaterial zugemischt wird.

15. Verfahren nach einem der vorhergehenden Ansprüche,
**dadurch gekennzeichnet, dass**
das Recyclingmaterial während des Granulierschrittes auf eine Granulatkorngröße von 0,8 bis 3 mm, insbesondere 0,8 bis 1,5 mm eingestellt wird.

16. Verfahren nach einem der vorhergehenden Ansprüche,
**dadurch gekennzeichnet, dass**
das recycelte Material am Ende des Recyclingprozesses mit PET-Neumaterial gemischt wird.

## Claims

1. A method for recycling polyethylene-therephthalate (PET), comprising the steps:
- extruding and/or granulating under a substantial vacuum (gas extraction) with or without stripping for removing volatile contaminants, in particular acetaldehyde and oligomers;
- performing solids post-condensation under a substantial vacuum with or without stripping for removing residual contaminants,
- wherein a crystallization step is performed between extrusion/granulation and/or solids post-condensation and preferably a drying step is performed before extruding/granulating.

2. The method according to claim 1, wherein the PET is washed for removing first contaminants, in particular prewashed with water including a base, in particular water including sodium hydroxide in a concentration range of 1 to 10 %, preferably 3 %, and fine cleaned with a water or steam preferably mixed with tensides.

3. The method according to claim 1 or 2, wherein the PET is in particular prepared, cleaned and/or separated from coarse dirt and contaminants by cutting, pre washing and/or separating before washing and in particular PET flakes are generated.

4. The method according to one of the preceding claims, wherein the drying step is performed through hot air or treatment with electromagnetic waves, in particular infrared or microwaves.

5. The method according to one of the preceding claims, wherein the drying step is performed at temperatures of 120° C to 160° C, preferably 150° C, in particular for 1 to 6 hours.

6. The method according to one of the preceding claims, wherein the crystallization step is performed until the PET has reached partial crystallinity which in particular prevents sticking together during further processing, and in particular reaches values of 30 to 50 %, preferably 40 % partial crystallinity.

7. The method according to one of the preceding claims, wherein the crystallization step is performed at temperatures of 130° C to 160° C, preferably 140° C for 10 to 20 minutes, preferably 15 minutes.

8. The method according to one of the preceding claims, wherein the crystallization step is performed in a hot air flow, preferably in a vibrating channel.

9. The method according to one of the preceding claims, wherein the stripping is only performed with inertial gas.

10. The method according to one of the preceding claims, wherein the melted PET material is filtered, wherein in particular replaceable filters and/or sifting grid combinations are used in candle or disc shape with a pore size of preferably less than 100 µm.

11. The method according to one of the preceding claims, wherein the PET flakes are sprayed with ethylene glycol before or during extruding and/or are mixed with additional additives like stabilizers, catalysts or similar.

12. The method according to claim 11, wherein spraying the PET flakes with ethylene glycol is performed before or during extruding as a function of the measured viscosity at the extruder output, wherein in particular a differential pressure measuring unit is provided at the extruder output for viscosity determination.

13. The method according to one of the preceding claims, wherein color additives are added to the recycling material before or during the extruding, wherein the color additives in particular provide a gray color to the recycled material.

14. The method according to one of the preceding claims, wherein an amorphous PET new material is mixed with the recycling material before or during the extrusion step.

15. The method according to one of the preceding claims, wherein the recycling material is adjusted to a granulate kernel size of 0.8 to 3 mm, in particular 0.8 to 1.5 mm during the granulating step.

16. The method according to one of the preceding claims, wherein the recycling material is mixed with PET new material at an end of the recycling process.

## Revendications

1. Procédé de recyclage de poly(téréphtalate d'éthylène) (PET), comprenant les étapes de procédé suivantes :
- extrusion et/ou granulation sensiblement sous vide (dégazage) avec ou sans stripage pour l'élimination de contaminations volatiles, en particulier d'acétaldéhyde et d'oligomères ;
- réalisation d'une post-condensation de matières solides sensiblement sous vide avec ou sans stripage pour l'élimination de contaminations résiduelles ;
**caractérisé par**
une étape de cristallisation entre l'extrusion/granulation et la post-condensation de matières solides, et de préférence une étape de séchage avant l'extrusion/granulation

2. Procédé selon la revendication 1,
**caractérisé en ce que**,
pour l'élimination de premières contaminations, le PET est lavé, en particulier prélavé avec de l'eau alcaline, en particulier de l'eau contenant de la soude caustique dans la plage de concentration de 1 à 10 %, de préférence 3 %, et purifié de façon poussée avec une eau ou une vapeur de préférence additionnée d'agents tensioactifs.

3. Procédé selon la revendication 1 ou 2,
**caractérisé en ce que**
en particulier avant le lavage du PET, le PET est préparé par broyage, prélavage et/ou tamisage, nettoyé et/ou séparé des grosses impuretés et des matières étrangères, et **en ce que**, en particulier, des paillettes de PET sont produites.

4. Procédé selon une des revendications précédentes, car
actérisé en ce que
l'étape de séchage s'effectue au moyen d'air très chaud ou d'un traitement avec des ondes électromagnétiques, en particulier des infrarouges ou des microondes.

5. Procédé selon une des revendications précédentes, car
actérisé en ce que
l'étape de séchage à des températures de 120° C à 160° C, de préférence 150° C, dure en particulier de 1 à 6 heures.

6. Procédé selon une des revendications précédentes, car
actérisé en ce que
l'étape de cristallisation est effectuée jusqu'à ce que le PET atteigne une cristallinité partielle qui empêche en particulier un collage lors de la suite du traitement, en particulier des valeurs de 30 à 50 %, de préférence de 40 %, de cristallinité partielle.

7. Procédé selon une des revendications précédentes, car
actérisé en ce que
l'étape de cristallisation est effectuée à des températures de 130° C à 160° C, de préférence 140° C, pendant 10 à 20 min, de préférence 15 min.

8. Procédé selon une des revendications précédentes,
**caractérisé en ce que**
l'étape de cristallisation est effectuée dans un flux d'air très chaud, de préférence dans un conduit vibrant.

9. Procédé selon une des revendications précédentes, car
actérisé en ce que
le stripage est effectué uniquement avec du gaz inerte.

10. Procédé selon une des revendications précédentes, car
actérisé en ce que
le matériau PET fondu est filtré, en particulier en recourant à des filtres interchangeables et/ou des combinaisons de tamis en forme de bougie ou de disque avec une dimension de pores de préférence inférieure à 100 µm.

11. Procédé selon une des revendications précédentes, car
actérisé en ce que,
avant ou pendant l'extrusion, les paillettes de PET sont soumises à une pulvérisation d'éthylène glycol et/ou additionnées d'additifs supplémentaires tels que des stabilisants, des catalyseurs et similaires.

12. Procédé selon la revendication 11,
**caractérisé en ce que**
la pulvérisation d'éthylène glycol sur les paillettes de PET s'effectue avant ou pendant l'extrusion en fonction de la viscosité mesurée à la sortie de l'extrudeuse, une unité de mesure de pression différentielle étant en particulier mise en oeuvre à la sortie de l'extrudeuse pour déterminer la viscosité.

13. Procédé selon une des revendications précédentes, car
actérisé en ce que,
avant ou pendant l'extrusion, des additifs colorants sont ajoutés au matériau de recyclage, lesquels confèrent en particulier une couleur grise au matériau recyclé.

14. Procédé selon une des revendications précédentes, car
actérisé en ce que,
avant ou pendant l'étape d'extrusion, du matériau neuf PET amorphe est mélangé au matériau de recyclage.

15. Procédé selon une des revendications précédentes, car
actérisé en ce que,
pendant l'étape de granulation, le matériau de recyclage est réglé à une dimension de grains de granulats de 0,8 à 3 mm, en particulier de 0,8 à 1,5 mm.

16. Procédé selon une des revendications précédentes, car
actérisé en ce que,
à la fin du processus de recyclage, le matériau recyclé est mélangé avec un matériau neuf PET.
